# EUROPEAN PATENT SPECIFICATION

(11) **EP 4 680 360 B1**
(45) Date of publication and mention of the grant of the patent: **07.10.2026**
(21) Application number: 24707884.3
(22) Date of filing: 16.02.2024
(51) Int. Cl.: B01D 25/164, B01D 25/176

(54) **INDUSTRIAL FILTER CLOTH**
INDUSTRIELLES FILTERTUCH
TISSU FILTRANT INDUSTRIEL

(30) Priority: 16.03.2023 FI 20235313
(43) Date of publication of application: 21.01.2026
(73) Proprietor: Valmet Technologies Oy, 02150 Espoo (FI)
(72) Inventor: OJAPELTO, Katja, 3880-705 São João de Ovar (PT); FONSECA, Catarina Marques, 3880-705 São João de Ovar (PT); MURTEIRA, Ana Sofia, 3880-705 São João de Ovar (PT); PONTES, Nuno L., 3880-705 São João de Ovar (PT)
(74) Representative: Berggren Oy
(86) International application number: PCT/FI2024/050060
(87) International publication number: WO 2024/189263

(56) References cited:
- ES-U- 1 282 804
- FR-A- 321 779
- KR-B1- 101 255 624

## Description

### Technical field

The present invention relates to filter cloths for press filters in particular for chamber press filters (also called chamber filter presses) for filtering fluid and solid mixtures. More especially the invention relates to a filter cloth according to the preamble part of claim 1.

### Background

As known from the prior art press filters are used especially to separate solids and liquids. For example, the chamber press filter comprises a plurality of adjacent plate-like filter frames configured to be pressed against each other for separating from a slurry or a suspension fed into the chamber press filter solid contents thereof to form filter cakes within the filter chambers. When the plate-like filter frames are moved away from each other and opened the filter cakes can be discharged therefrom. Thereafter filter plates are closed, and further slurry or suspension is fed again into the filter chambers for a subsequent filtration cycle.

It is also known from prior art that each operating surface of the plate-like filter frame is covered with a filter cloth. The filter cloth for one filter frame may be formed of two single filter cloths attached to each other at edges thereof, or of one overhang type of filter cloth, hanging over the top of the filter frame and attached at the edges around the filter frame, or double cloths, connected in one area by commonly known as "barrel neck" and then to be attached around the filter frame.

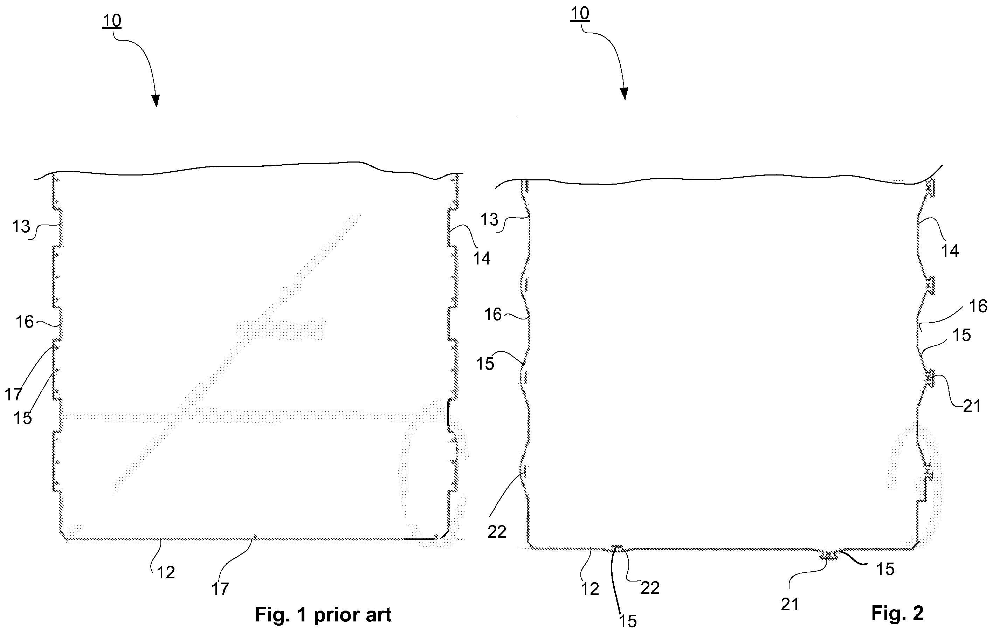

It is known from prior art that different types of the attachment of the edges of the filter cloth for attaching the filter cloth around the filter frame have been made by providing attachment holes at the edge areas of the filter cloth, through which holes plastic cable ties are threaded and fastened to attach the filter cloth to its place In figure 1 is schematically shown an example of a filter cloth 10 known from prior art. The example is a single type filter cloth i.e. two filter cloths 10 are used to cover the filter frame, one on each operating surface of the filter frame. The edges 13, 14 of the filter cloth 10 are provided with tabs 15 spaced apart by recessions 16. The tabs 15 have attachment holes 17. Also, the bottom edge 12 of the filter cloth 10 can have attachment holes 17, respectively. For attachment of the filter cloth several plastic cable ties are thus threaded through the attachment holes 17 of the filter cloth 10 for one operating surface of the filter frame and through respective attachment holes 17 of the respective edge of the filter cloth for the other operating surface of the filter frame and fastened. For example, one chamber press filter may have several thousands of attachment holes and thus several thousands of plastic ties for the filter cloths. The filter cloths of a press filter are typically changed at regular intervals, even every two weeks in the end of the filter cloths' lifetime, the cable ties are cut off with sharp tools causing safety hazard for the operators. The plastic cable ties are thin and difficult to handle, and work is even more difficult as the operators have to wear gloves during the installation. One filter frame may also be several meters high. The fastening procedure is a time-consuming and cumbersome work, bearing in mind also that the filter frames can be several meters high and the filter cloths are replaced with the filter frames in place in the press filter. The cable ties may also fall down and be dragged into the process streams causing damage in the pumps and machinery of the press filter.

In patent publication KR101255624B1 is disclosed a filter cloth of a press filter, which press filter comprises filter frames, which filter cloth/-s comprise side edges and which filter cloth/-s are configured to cover operating surfaces of the filter frame, in which the side edges of the filter cloth/-s has/have fastening elements and counter fastening elements to be fastened to each other and configured to form attachments of the filter cloth/-s at the filter frame, which fastening elements and counter elements are integrally fixed to the filter cloth/- s.

In utility model publication ES1282804U is disclosed a set of filter cloth and device for fixing the filter cloth on a filter plate of a filter press, comprising a first portion of filter cloth sized to be arranged on a front face of the filter plate, a second portion of filter cloth dimensioned to be arranged on a rear face (3b) of the filter plate, said first portion and said second portion of filter cloth a plurality of flaps of filter cloth dimensioned to be arranged on the lateral faces of the filter plate.

**In** patent application publication FR321779A is disclosed an apparatus for the filtration of liquids, which filtration apparatus comprises grouped elements consisting of frames and grids covered with cloth folded in two and stretched in all directions.

An object of the invention is to create a filter cloth, in which the disadvantages and problems of prior art are eliminated or at least minimized.

**In** particular an object of the invention is to create an improved filter cloth, especially in respect of fastening of the filter cloth around the filter frame of the press filter.

### Summary

**In** order to achieve the above objects and those that will come apparent later the filter cloth according to the invention is mainly characterized by the features of the characterizing part of the independent claim 1. Advantageous aspects and features of the invention are presented in the dependent claims.

According to the invention the filter cloth of a press filter, which press filter comprises filter frames, which filter cloth/-s comprise side edges and a bottom edge and which filter cloth/-s are configured to cover operating surfaces of the filter frame and to be attached at least at side edges of the filter cloth/-s, wherein the filter cloth/-s has/have at least at one side edge fastening elements and at least at the other side edge counter fastening elements to be fastened to each other and configured to form attachments of the filter cloth/-s at the filter frame and the fastening elements and the counter fastening elements are made directly to the filter cloth/-s.

According to an advantageous feature of the invention the fastening elements and the counter fastening elements are made directly to the filter cloth/-s by cutting or punching or other means alike.

According to an advantageous feature of the invention the filter cloth/-s has/have the fastening elements at one side edge of the filter cloth and the counter fastening elements at the other side edge of the filter cloth.

According to an advantageous feature of the invention the fastening element and the counter fastening element are configured to form an inter-lockable, advantageously openable attachment between each other.

According to an advantageous feature of the invention the filter cloth/-s comprise alternating the fastening elements and the counter fastening elements at least at one edge of the filter cloth/-s.

According to an advantageous feature of the invention the bottom and side edges of the filter cloth/-s have tabs spaced apart and the fastening elements and the counter fastening elements are made in connection with the tabs.

According to the invention the fastening elements have an inter-lockable shape comprising a stem and arms, for example a T- or an arrow shape.

According to an advantageous feature of the invention the fastening elements have two opposite cuts forming flaps in the stem. The flaps in the stem can advantageously be curved, but they also be formed of other than curved cuts forming correspondingly inter-lockable shape.

According to an advantageous feature of the invention the counter fastening element is a cut, advantageously a straight cut, thus forming counter shape for the inter-lockable shape of the fastening element. Also, other inter-lockable shapes can be used.

According to an advantageous feature of the invention length of the cut of the counter fastening elements is equal to or greater than width of the stem of the fastening element.

According to an advantageous feature of the invention width between open ends of the arms of the fastening element is equal to or greater than width of the stem of the fastening element.

According to an advantageous feature of the invention distance between base parts, i.e. uncut parts of the two flaps formed by the two opposite cuts is equal to or greater than the distance of the cut from the outer edge of the tab of the counter fastening element.

According to an advantageous feature of the invention the filter cloth is a single filter cloth or a double filter cloth or an overhang filter cloth, when covering the filter frame.

According to an advantageous aspect of the invention the filter cloth to be used in a press filter is configured such, that in operation, two pieces of substantially identical filter cloths are used to cover one frame on both operating surfaces, and the edges of the filter cloths are fastened together by the fastening elements on one edge and the counter fastening elements on the other edge.

By the invention and its advantageous features several advantages are achieved: Firstly, the fastening of the filter cloth/-s in place around the filter frame is easy and fast by hand without tools. Secondly, the fastening of the filter cloth/-s in place around the filter frame can be done without any additional accessories, such as cable ties. Thirdly, the removal of used filter cloth/-s from around the filter frame is easy and fast as the attachment is easily openable by hand. Further, each fastening element and the counter element thereof are of the filter cloth material, thus, the recycling properties of the filter cloths and attachment means is improved. Additionally, there is no loose parts that could end up into the filtration process and thus, the damage risks of the press filter are significantly decreased. Also, the filter cloth with the corresponding fastening can be used for single, double and overhang filter cloths.

### Brief description of the drawings

Aspects of the invention, however, together with additional objects and advantages thereof, will be best understood from the following description of some example embodiments when read in connection with the accompanying drawings and in the following the invention is described in more detail referring to the accompanying drawing, in which
**In** figure 1 is schematically shown an example of a filter cloth know prior art.
In figure 2 is schematically shown an advantageous example of a filter cloth according to the invention.
In figures 3A-3G is schematically shown an advantageous example of installing a filter cloth according to the invention around a filter frame.

### Detailed description

During the course of this description like numbers and signs will be used to identify like elements according to the different views which illustrate the invention. Repetition of some reference signs may have been omitted in the figures for clarity reasons.

In figure 1 is schematically shown an example of a filter cloth 10 known from prior art. The example is a single type filter cloth i.e. two filter cloths 10 are used to cover the filter frame, one on each operating surface of the filter frame. The edges 13, 14 of the filter cloth 10 are provided with tabs 15 spaced apart by recessions 16. The tabs 15 have attachment holes 17. Also, the bottom edge 12 of the filter cloth 10 can have attachment holes 17, respectively. For attachment of the filter cloth several plastic cable ties are thus threaded through the attachment holes 17 of the filter cloth 10 for one operating surface of the filter frame and through respective attachment holes 17 of the respective edge of the filter cloth for the other operating surface of the filter frame and fastened. The configuration of the upper edge of the filter cloth/-s 10 can be any as such to one skilled in the art known configuration.

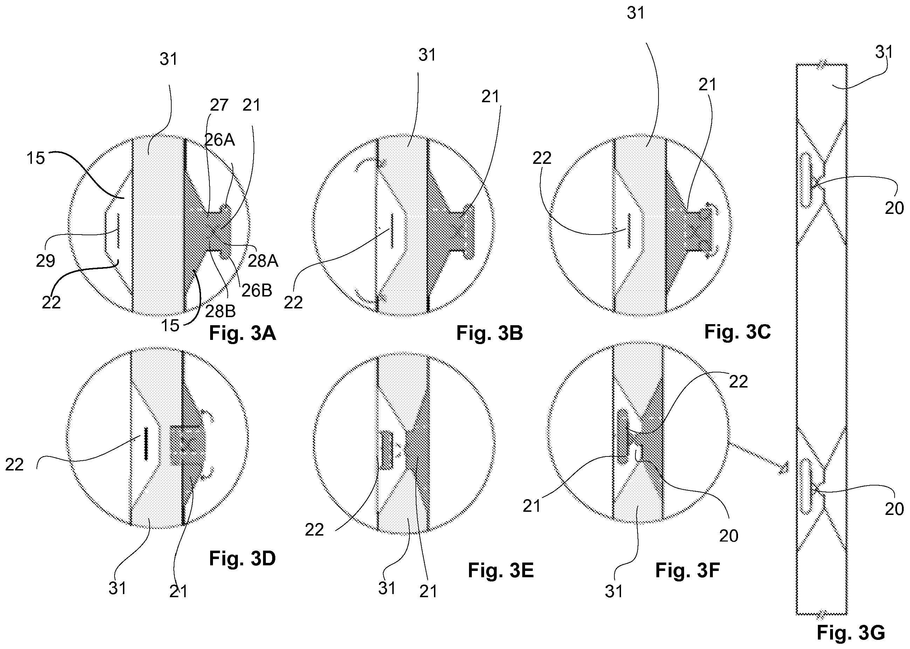

In figure 2 is schematically shown an advantageous example of a filter cloth 10 and in figures 3A-3G is schematically shown an example of installing a filter cloth 10 a filter frame 31.

The filter frame 31 has a plate-like form and the operating surfaces are the wide sides of the plate-like form i.e. on opposite sides of the filtering frame 31 and the non-operating surfaces are the narrow sides of the plate-like form i.e. on opposite sides of the filtering frame 31. The filter cloth/-s 10 cover the operating surfaces and the fastening is located on the non-operating surface/- s.

The filter cloth 10 comprises side edges 13, 14 and a bottom edge 12. The side edges 13, 14 comprise tabs 15 spaced apart. The side edges 13, 14 can be straight or comprise recessions 16 between the tabs 15 as shown in the example of the figures. The tabs 15 have advantageously towards the adjacent recessions 16 inclined outlines. The tabs 15 on one of the side edges 14 have outwards extending protrusions each forming a fastening element 21 and the tabs on the other side edge 13 have a counter fastening element 22, to which the respective fastening element 21 is attached for attaching the filter cloth/-s 10 to cover the operating surfaces of the filter frame 31 over the non-operating surface of the filter frame. The tabs 15 provide that the filter cloth/-s 10 extend over the edge of the filter frame 31 forming the fastening distance over the non-operating surfaces, the narrow sides of the filter frame 31.

The filter cloth 10 can be a single filter cloth 10, in case of which one filter cloth 10 covers one filter surface of the filter frame 31 and the two filter cloths 10 are fastened to each other to cover the operating surfaces of the filter frame 31, a double filter cloth 10, in case which the filter cloth 10 is folded around one side edge of the filter frame and the side edges of the filter cloth 10 are fastened to each other to cover the operating surfaces of the filter frame 31, or an overhang filter cloth 10, in which case the filter cloth 10 is folded over the top edge of the filter frame and on each side of the filter frame the side edges of the filter cloth 10 are fastened to each other.

The fastening elements 21 at one side edge 14 and the counter fastening elements 22 at the other side edge 13 are made directly to the filter cloth 10, advantageously by cutting. The fastening element 21 and the counter fastening element 22 are configured to form an interlocking, advantageously attachment 20 between each other.

To the tabs 15 bottom edge 12 of the filter frame the fastening element/-s 21 and the counter fastening elements 22 are advantageously provided alternating such, that also the bottom edge fastening of the filter cloth 10 is provided for the single, double and overhang filter cloths 10.

With such a design according to this invention, the filter cloths can be quickly fastened or detached from the filter frames without bringing any damaging risk. It is known that to some extent vibration exists in the filtration system, in addition to which the filter cakes are sometimes removed manually with special tools, which might also bring risk to detach the fastening of the filter cloth. Therefore, the present invention further attempts to improve the locking stability and reliability of the fastening system on the basis of the foregoing. On this basis, the following advantageous designs are made, and to be described in the context together with the figures 2-3G. This is the technical problem further solved by the present invention, and it is also a sub-inventive point. The technical effects of these further designs are to prevent the detaching of the fastening system, to further secure the locking so that the fastening elements remain stable during filtering process, even during the vibration and movement.

In the advantageous example of the figures 2-3G the fastening element 21 has an inter-lockable shape, and the inter-lockable shape in the example of the figures is formed as a T-shaped form made to the one edge 14 of the filter cloth 10 as a protrusion of the tab 15. The counter fastening element 22 is a cut 29, advantageously a straight cut 29, made to the tab 15 at a distance from the outer edge of the tab 15.

As can be seen from the figure 3A the inter-lockable shape, for example the T-shape or an arrow shape, of the fastening element 21 has a stem 27 and two cuts 28A, 28B, advantageously oppositely curved, for example half-circular cuts 28A, 28B, in the stem 27 forming to opposite directions opening flaps. The fastening element 21 further has two to opposite direction extending arms 26A, 26B at the outer end of the stem 27. The fastening element 21 is on one side of the filter frame 31 and the counter fastening element 22 is on the other side of the filter frame 31.

To begin the fastening of the filter cloth/-s 10 first the tab 15 of the counter fastening element 22 i.e. the cut 29 and the tab 15 is folded against the non-operating surface of the filter frame 31, as can be seen from figure 3B.

Next stage in the fastening of the filter cloth/-s 10 is that the arms 26A, 26B of the T-shape of the fastening element 21 are folded to be against the stem 27 of the T-shape of the fastening element 21, as can be seen from figure 3C. These fastening elements may be specially treated in order to enhance the wear resistance and to prolong the service life by for example coating or other surface treatments.

To proceed further with the fastening of the filter cloth/-s 10 the stem 27 of the T-shape of the fastening element 21 is folded towards the cut 29 i.e. the counter fastening element 22 and towards the non-operating surface of the filter frame 31 and the surface of the tab 15, as can be seen from figure 3D.

In the following stage, as can be seen from figure 3E, the folded arms 26A, 26B and the stem 27 is pushed through the cut 29 such that the flap formed by the cut 28B closer to the base of the stem 27 fastens to the outer edge of the tab 15 of the counter fastening element 22.

As can be seen from figure 3F, the folds of the arms 26A, 26B are opened to extend over the length of the cut 29. The flap formed by the other cut 28A fastens to the edge of the cut 29 such, that the flaps formed by the cuts 28A, 28B are the cut parts opposite to each other on the tab 15 of the counter fastening element 22 and attachment 20 of the fastening element 21 and the counter fastening element 22 is provided and thus, the edges 13, 14 of the filter cloth/-s 10 are fastened to each other on the non-operating surface of the filter frame 31, as can be seen also from figure 3G.

The length of the cut 29 of the counter fastening elements 22 is equal to or greater than the width of the stem 27 of the T-shape of the fastening element 21 such, that the stem 27 fits through the cut 29. The width between open ends of the arms 26A, 26B of the T-shape of the fastening element 21 is greater than the width of the stem 27 of the T-shape of the fastening element 21 and the length of the cut 29 of the counter fastening elements 22. The distance between the base parts, i.e. uncut parts of the two flaps formed by the two cuts 28A, 28B is equal to or greater than the distance of the cut 29 form the outer edge of the tab 15 of the counter fastening element 22, thus providing a secure and tight fastening of the filter cloth/-s.

In the description in the foregoing, although some functions have been described with reference to certain features, those functions may be performable by other features whether described or not. Although features have been described with reference to certain embodiments or examples, those features may also be present in other embodiments or examples whether described or not. Above the invention has been described by referring to some advantageous examples only to which the invention is not to be narrowly limited. Many modifications and alterations are possible within the invention as defined in the following claims.

## Claims

1. Filter cloth of a press filter, which press filter comprises filter frames (31), which filter cloth/-s (10) comprise side edges (13, 14) and a bottom edge (12) and which filter cloth/-s (10) are configured to cover operating surfaces of the filter frame (31) and to be attached at least at side edges (13, 14) of the filter cloth/-s (10), which filter cloth/-s (10) has/have at least at one side edge (14) fastening elements (21) and at least at the other side edge (13) counter fastening elements (22) to be fastened to each other and configured to form attachments (20) of the filter cloth/-s (10) at the filter frame (31), **characterized in that** the fastening elements (21) and the counter fastening elements (22) are made directly to the filter cloth/-s and that the fastening elements (21) have an inter-lockable shape comprising a stem (27) and arms (26A, 26B).

2. Filter cloth according to claim 1, **characterized in that** the fastening elements (21) and the counter fastening elements (22) are made directly to the filter cloth/-s (10) by cutting or punching or any other means alike.

3. Filter cloth according to claim 1 or 2, **characterized in that** the filter cloth/-s (10) has/have the fastening elements (21) at one side edge (14) of the filter cloth (10) and the counter fastening elements (22) at the other side edge (13) of the filter cloth (10).

4. Filter cloth according to claim 1 or 2, **characterized in that** the filter cloth/-s (10) comprise alternating the fastening elements (21) and the counter fastening elements (22) at least at one edge of the filter cloth/-s (10).

5. Filter cloth according to any of the previous claims, **characterized in that** the fastening element (21) and the counter fastening element (22) are configured to form an inter-lockable, advantageously openable attachment (20) between each other.

6. Filter cloth according to any of the previous claims, **characterized in that** the bottom and side edges (12, 13, 14) of the filter cloth/-s (10) have tabs (15) spaced apart and that the fastening elements (21) and the counter fastening elements (22) are made in connection with the tabs (15).

7. Filter cloth according to any of the previous claims, **characterized in that** the fastening elements (21) have two opposite cuts (28A, 28B) forming flaps in the stem (27).

8. Filter cloth according to any of the previous claims, **characterized in that** the counter fastening element (22) is a cut (29) advantageously a straight cut.

9. Filter cloth according to claim 8, **characterized in that** length of the cut (29) of the counter fastening element (22) is equal to or greater than width of the stem (27) of the fastening element (21).

10. Filter cloth according to any of the previous claims, **characterized in that** width between open ends of the arms (26A, 26B) of the fastening element (21) is equal to or greater than width of the stem (27) of the fastening element (21).

11. Filter cloth according to claims 8-10, **characterized in that** distance between base parts, i.e. uncut parts of the two flaps formed by the two opposite cuts (28A, 28B) is equal to or greater than the distance of the cut (29) from the outer edge of the tab (15) of the counter fastening element (22).

## Patentansprüche

1. Filtertuch eines Pressfilters, wobei der Pressfilter Filterrahmen (31) umfasst, wobei das Filtertuch (10) Seitenkanten (13, 14) und eine Unterkante (12) aufweist und wobei das Filtertuch (10) konfiguriert ist, um die Betriebsoberflächen des Filterrahmens (31) abzudecken und mindestens an den Seitenkanten (13, 14) des Filtertuchs (10) befestigt zu werden, wobei das Filtertuch (10) an mindestens einer Seitenkante (14) Befestigungselemente (21) und an mindestens der anderen Seitenkante (13) Gegenbefestigungselemente (22) aufweist, die miteinander zu verbinden sind und konfiguriert sind, um Befestigungen (20) des Filtertuchs (10) am Filterrahmen (31) zu bilden, **dadurch gekennzeichnet, dass** die Befestigungselemente (21) und die Gegenbefestigungselemente (22) direkt an dem Filtertuch angebracht sind und dass die Befestigungselemente (21) eine ineinandergreifende Form aufweisen, die einen Schaft (27) und Arme (26A, 26B) umfasst.

2. Filtertuch nach Anspruch 1, **dadurch gekennzeichnet, dass** die Befestigungselemente (21) und die Gegenbefestigungselemente (22) durch Schneiden, Stanzen oder auf ähnliche Weise direkt an dem Filtertuch (10) angebracht sind.

3. Filtertuch nach Anspruch 1 oder 2, **dadurch gekennzeichnet, dass** das Filtertuch (10) die Befestigungselemente (21) an einer Seitenkante (14) des Filtertuchs (10) und die Gegenbefestigungselemente (22) an der anderen Seitenkante (13) des Filtertuchs (10) aufweist.

4. Filtertuch nach Anspruch 1 oder 2, **dadurch gekennzeichnet, dass** das Filtertuch (10) mindestens an einer Kante des Filtertuchs (10) abwechselnd Befestigungselemente (21) und Gegenbefestigungselemente (22) umfasst.

5. Filtertuch nach einem der vorstehenden Ansprüche, **dadurch gekennzeichnet, dass** das Befestigungselement (21) und das Gegenbefestigungselement (22) konfiguriert sind, um zwischen sich eine ineinandergreifende, vorteilhafterweise lösbare Befestigung (20) zu bilden.

6. Filtertuch nach einem der vorstehenden Ansprüche, **dadurch gekennzeichnet, dass** die unteren und seitlichen Ränder (12, 13, 14) des Filtertuchs (10) voneinander beabstandete Laschen (15) aufweisen und dass die Befestigungselemente (21) und die Gegenbefestigungselemente (22) in Verbindung mit den Laschen (15) ausgebildet sind.

7. Filtertuch nach einem der vorstehenden Ansprüche, **dadurch gekennzeichnet, dass** die Befestigungselemente (21) zwei gegenüberliegende Einschnitte (28A, 28B) aufweisen, die im Schaft (27) Klappen bilden.

8. Filtertuch nach einem der vorstehenden Ansprüche, **dadurch gekennzeichnet, dass** das Gegenbefestigungselement (22) ein Einschnitt (29) ist, vorzugsweise ein gerader Einbschnitt.

9. Filtertuch nach Anspruch 8, **dadurch gekennzeichnet, dass** die Länge des Einschnitts (29) des Gegenbefestigungselements (22) gleich oder größer ist als die Breite des Schafts (27) des Befestigungselements (21).

10. Filtertuch nach einem der vorstehenden Ansprüche, **dadurch gekennzeichnet, dass** die Breite zwischen den offenen Enden der Arme (26A, 26B) des Befestigungselements (21) gleich oder größer ist als die Breite des Schafts (27) des Befestigungselements (21).

11. Filtertuch nach den Ansprüchen 8 bis 10, **dadurch gekennzeichnet, dass** der Abstand zwischen den Basisteilen, d. h. den ungeschnittenen Teilen der beiden durch die beiden gegenüberliegenden Einschnitte (28A, 28B) gebildeten Klappen, gleich oder größer ist als der Abstand des Einschnitts (29) von der Außenkante der Lasche (15) des Gegenbefestigungselements (22).

## Revendications

1. Toile filtrante d'un filtre-presse, lequel filtre-presse comprend des cadres filtrants (31), la ou les toiles filtrantes (10) comprenant des bords latéraux (13, 14) et un bord inférieur (12), et la ou les toiles filtrantes (10) étant configurées pour recouvrir des surfaces de travail du cadre filtrant (31) et pour être fixées au moins au niveau des bords latéraux (13, 14) de la ou des toiles filtrantes (10), laquelle ou lesquelles toiles filtrantes (10) a/ont au moins au niveau d'un bord latéral (14) des éléments de fixation (21) et au moins au niveau de l'autre bord latéral (13) des contre-éléments de fixation (22) destinés à être fixés les uns aux autres et configurés pour former des fixations (20) de la ou des toiles filtrantes (10) au niveau du cadre filtrant (31), **caractérisée en ce que** les éléments de fixation (21) et les contre-éléments de fixation (22) sont réalisés directement sur la ou les toiles filtrantes et **en ce que** les éléments de fixation (21) ont une forme permettant un verrouillage mutuel, comprenant une tige (27) et des bras (26A, 26B).

2. Toile filtrante selon la revendication 1, **caractérisée en ce que** les éléments de fixation (21) et les contre-éléments de fixation (22) sont réalisés directement sur la ou les toiles filtrantes (10) par découpe, par poinçonnage ou par tout autre moyen similaire.

3. Toile filtrante selon la revendication 1 ou 2, **caractérisée en ce que** la ou les toiles filtrantes (10) a/ont les éléments de fixation (21) au niveau d'un premier bord latéral (14) de la toile filtrante (10) et les contre-éléments de fixation (22) au niveau de l'autre bord latéral (13) de la toile filtrante (10).

4. Toile filtrante selon la revendication 1 ou 2, **caractérisée en ce que** la ou les toiles filtrantes (10) comprend/comprennent une alternance des éléments de fixation (21) et des contre-éléments de fixation (22) au niveau au moins d'un bord de la ou des toiles filtrantes (10).

5. Toile filtrante selon l'une quelconque des revendications précédentes, **caractérisée en ce que** l'élément de fixation (21) et le contre-élément de fixation (22) sont configurés pour former entre eux une fixation (20) verrouillable mutuellement, et de préférence ouvrable.

6. Toile filtrante selon l'une quelconque des revendications précédentes, **caractérisée en ce que** les bords inférieurs et latéraux (12, 13, 14) de la ou des toiles filtrantes (10) ont des languettes (15) espacées les unes des autres, et **en ce que** les éléments de fixation (21) et les contre-éléments de fixation (22) sont réalisés en liaison avec les languettes (15).

7. Toile filtrante selon l'une quelconque des revendications précédentes, **caractérisée en ce que** les éléments de fixation (21) ont deux découpes opposées (28A, 28B) formant des volets dans la tige (27).

8. Toile filtrante selon l'une quelconque des revendications précédentes, **caractérisée en ce que** le contre-élément de fixation (22) est une découpe (29), de préférence une découpe rectiligne.

9. Toile filtrante selon la revendication 8, **caractérisée en ce que** la longueur de la découpe (29) du contre-élément de fixation (22) est supérieure ou égale à la largeur de la tige (27) de l'élément de fixation (21).

10. Toile filtrante selon l'une quelconque des revendications précédentes, **caractérisée en ce que** la largeur entre les extrémités ouvertes des bras (26A, 26B) de l'élément de fixation (21) est supérieure ou égale à la largeur de la tige (27) de l'élément de fixation (21).

11. Toile filtrante selon les revendications 8 à 10, **caractérisée en ce que** la distance entre les parties de base, c'est-à-dire les parties non découpées des deux volets formés par les deux découpes opposées (28A, 28B), est supérieure ou égale à la distance de la découpe (29) par rapport au bord extérieur de la languette (15) du contre-élément de fixation (22).
